(19) Europäisches Patentamt
European Patent Office
Office européen des brevets

(11) Publication number: **0 409 454 A1**

(12) **EUROPEAN PATENT APPLICATION**

(21) Application number: **90307406.0**

(22) Date of filing: **06.07.90**

(51) Int. Cl.5: **C08L 23/02**, C08K 5/19, C08K 5/09

(30) Priority: **21.07.89 GB 8916731**

(43) Date of publication of application: **23.01.91 Bulletin 91/04**

(84) Designated Contracting States: **AT BE CH DE DK ES FR GB GR IT LI LU NL SE**

(71) Applicant: **IMPERIAL CHEMICAL INDUSTRIES PLC**
**Imperial Chemical House, Millbank**
**London SW1P 3JF(GB)**

(72) Inventor: **Bath, Colin**
**1 East View**
**Summerseat, Bury BL9 5PG(GB)**

(74) Representative: **James, David Gomer et al**
**Imperial Chemical Industries PLC Legal Department: Patents Po Box 6 Bessemer Road**
**Welwyn Garden City Herts, AL7 1HD(GB)**

(54) **Polymer composition.**

(57) A polymer composition comprises an olefin polymer, a carboxylic acid compound which contains at least three carbon atoms together with a quaternary ammonium salt wherein at least one substituent on the nitrogen atom is an alkyl group containing at least eight carbon atoms. The olefin polymer may be an ethylene polymer, a propylene polymer or copolymers thereof. The carboxylic acid may be an aliphatic diacid such as succinic acid. The quaternary ammonium salt may be a halide or sulphate. The quaternary ammonium group generally contains two or preferably only one alkyl group having at least eight carbon atoms. Other substituents in the quaternary ammonium group can be methyl, benzyl or poly (alkylene oxide) groups, which may be substituted. The polymer composition may be obtained by conventional powder blending or melt blending techniques. Preferred polymer compositions have an increased clarity and a reduced level of haze compared to the polymer alone or the polymer containing only the carboxylic acid.

EP 0 409 454 A1

# POLYMER COMPOSITION

The present invention relates to polymer compositions and also to the production of shaped articles formed from such compositions.

Olefin polymers are readily available and widely used polymeric materials. The most extensively available olefin polymers are ethylene and propylene polymers, the term "polymer" being used herein to include copolymers with other monomers copolymerisable therewith, including polymer monomers such as vinyl acetate. Propylene polymers have a melting point which is generally higher than that of ethylene polymers and hence propylene polymers are suitable for use at somewhat higher temperatures than ethylene polymers. Ethylene and propylene polymers can be used for packaging but moulded articles formed from these polymers generally show a high percentage of haze and hence are not satisfactory for applications in which good clarity is desirable.

It is known that the addition of nucleating agents, for example sodium benzoate, to olefin polymers provides an increase in the crystallisation temperature, and/or an improvement in the optical properties, of the polymer. Furthermore, the use of nucleating agents can allow a shorter cycle time, and hence better productivity, in an injection moulding process. However, the use of such nucleating agents is often limited due to their high price, for example dibenzylidene sorbitol, or to dispersion problems, for example with sodium benzoate.

In our copending European Patent Application Publication No 0267695, we disclose a composition comprising a mixture of (a) a carboxylic acid compound which contains at least three carbon atoms; and (b) an amine. Such mixtures are disclosed as being effective to increase the crystallisation temperature and/or to improve the optical properties, of olefin polymers. We have now found further polymer compositions which include a carboxylic acid compound and which have superior optical properties to the olefin polymer compositions described in our copending European Patent Application Publication No 0267695.

According to the present invention there is provided a polymer composition comprising (a) an olefin polymer; (b) a carboxylic acid compound which contains at least three carbon atoms; and (c) a quaternary ammonium salt wherein at least one substituent on the nitrogen atom is an alkyl group containing at least eight carbon atoms.

Component (a) of the composition is an olefin polymer, which term is used herein to include both homopolymers and copolymers. The olefin polymer may be an ethylene homopolymer or copolymer, particularly high density polyethylene or linear low density polyethylene which is a copolymer of ethylene with a higher olefin monomer such as butene-1, hexene-1, octene-1 or 4-methylpentene-1. Other ethylene polymers are the copolymers of ethylene and a polar monomer, for example an ethylene-vinyl acetate copolymer. Alternatively, the olefin polymer may be a propylene homopolymer or copolymer, for example a random copolymer of propylene with up to 8% by weight, relative to the polymer, of ethylene, or a sequential polymer obtained by polymerising propylene in the essential absence of other monomers and thereafter copolymerising a mixture of ethylene and propylene to give a polymer containing from 5 up to 30% by weight of ethylene. The olefin polymers used in the compositions of the present invention are thermoplastics materials and are essentially free from plastics materials which are capable of being cross-linked. The olefin polymers may be used in admixture with other polymeric materials but the proportion of such other polymeric materials should be less than 50% by weight of the total amount of polymeric material. If other polymeric materials are present, it is preferred that the quantity of these does not exceed 20% by weight of the total amount of polymeric material.

The carboxylic acid compound which is component (b) is preferably one containing at least two carboxylic acid groups attached to an optionally substituted saturated aliphatic hydrocarbon group or one containing at least one carboxylic acid group attached to an optionally substituted saturated or unsaturated ring system. Carboxylic acids containing at least two carboxylic acid groups attached to an aliphatic hydrocarbon group include glutaric acid, adipic acid, succinic acid, suberic acid, pimelic acid, azelaic acid and sebacic acid. Preferred carboxylic acids of this type contain two carboxylic acid groups and from three to ten carbon atoms. Carboxylic acids containing at least one carboxylic acid group attached to a ring system include monocarboxylic acids such as benzoic acid, toluic acid, and p-tertiary butyl benzoic acid, hydroxycarboxylic acids such as salicyclic acid, and dicarboxylic acids such as phthalic acid, terephthalic acid, cyclohexane-1,2-dicarboxylic acid and cyclohexane-1,4-dicarboxylic acid. If the acid includes a substituted aliphatic hydrocarbon group or ring system, the substituent may be at least one hydroxy group, halogen atom, ester (that is an acyloxy) group, a sulphur-containing acid group or a salt of said acid, nitrile group, ether group or a different hydrocarbon group, that is a hydrocarbon ring or an aliphatic group respectively, and the hydrocarbon groups of the substituent may be further substituted with the same or

different substituent groups. The substituent may contain several halogen atoms, for example as in a trifluoro- or trichloro-methyl group. With the exception of a hydroxy group substituent, and the carboxylic acid groups which are present, it is generally preferred that the hydrocarbon group of the carboxylic acid contains no other substituents. The carboxylic acid which is used as component (b) is a nucleating and/or clarifying agent for olefin polymers and when incorporated into an olefin polymer is effective to increase the crystallisation temperature and/or to improve the optical properties of the polymer.

The quaternary ammonium salt which is component (c) may be a compound of general formula I:-

$[NR^1R^2R^3R^4]$ X I

wherein

$R^1$ is an alkyl group containing at least eight carbon atoms;

$R^2$ is a hydrocarbyl group, a substituted hydrocarbyl group or a group $(R^5O)_a(C_2H_4O)_bR^6$;

$R^3$ is a hydrocarbyl group, a substituted hydrocarbyl group or a group $(R^5O)_a(C_2H_4O)_bR^6$;

$R^4$ is a hydrocarbyl group, a substituted hydrocarbyl group or a group $(R^5O)_a(C_2H_4O)_bR^6$;

$R^5$ is an alkylene group containing 3 to 5 carbon atoms;

$R^6$ is hydrogen, a hydrocarbyl group, a substituted hydrocarbyl group or an acyl group;

a is zero or is an integer which has a value of from 1 to 50;

b is zero or is an integer which has a value of from 1 to 50; and

X is an anion in an amount and having a valency to give a neutral compound.

The anion X is very conveniently monovalent and can be, for example, a halide ion or an alkylsulphate ion. More specifically the anion X can be a chloride, bromide, or iodide ion or can be a methylsulphate ion.

The group $R^1$ preferably contains at least ten carbon atoms. In general there is no significant benefit obtained if the group $R^1$ contains more than 30 carbon atoms, and it is preferred that $R^1$ contains not more than 24 carbon atoms for example up to, and including, 18 carbon atoms.

If the groups $R^2$, $R^3$ and $R^4$ are all groups $(R^5O)a(C_2H_4O)_bR^6$ in which a and b are both zero and $R^6$ is hydrogen, then the quaternary ammonium salt is of the type $[NH_3R^1]$ X. However, it is generally preferred that at least one of the groups $R^2$, $R^3$ and $R^4$ is other than hydrogen and we have obtained useful results with quaternary ammonium salts in which all of the groups $R^2$, $R^3$ and $R^4$ are other than hydrogen. The groups $R^2$, $R^3$ and $R^4$ may be alkyl groups, aryl groups, cycloalkyl groups or a mixture thereof, for example a benzyl group. If any of the groups $R^2$, $R^3$ or $R^4$ is an alkyl group, it is preferably a group which contains not more than 30 carbon atoms and may be the same as the group $R^1$. In general however, if any of the groups $R^2$, $R^3$ or $R^4$ is an alkyl group, it is a lower alkyl group, that is an alkyl group containing not more than six carbon atoms, for example a methyl group. If any of the groups $R^2$, $R^3$ or $R^4$ is a substituted hydrocarbyl group, the substituent may be at least one halogen atom, a carboxylic acid group, a hydroxy group, a nitrile group, a hydrocarbyloxy group, a hydrocarbonyl group (that is an acyl group), a hydrocarbyloxycarbonyl group or a hydrocarbonyloxy group, and the hydrocarbyl groups may be further substituted with any of the foregoing substituent groups. If any of the groups $R^2$, $R^3$ or $R^4$ is a group $(R^5O)_a(C_2H_4O)_bR^6$, it is typically an ethyleneoxy group in which $R^6$ is hydrogen. In such a group the value of a is zero. We have obtained useful results with quaternary ammonium salts in which two of the groups $R^2$, $R^3$ and $R^4$ are groups $(R^5O)_a(C_2H_4O)_bR^6$ in which a is zero and $R^6$ is hydrogen and the sum of the integer b in the two groups is at least two. The sum of the integer b may be 50 or greater but in general the sum does not exceed 30 and particularly does not exceed 20. Quaternary ammonium salts which can be used as component (c) include:-

A alkyl ($C_{13}$-$C_{15}$)-dimethyl-octadecanoyloxyethyl ammonium methyl sulphate;

B alkyl ($C_{13}$-$C_{15}$)-trimethylammonium methyl sulphate;

C alkyl ($C_{13}$-$C_{15}$)-trimethylammonium chloride;

D alkyl ($C_{13}$-$C_{15}$)-benzyldimethylammonium chloride;

E alkyl ($C_{13}$-$C_{15}$)-bis (polyethoxy) methyl ammonium methyl sulphate in which the polyethoxy groups together contain two ethoxy ($C_2H_4O$) groups;

F alkyl ($C_{13}$-$C_{15}$)-bis(polyethoxy) methyl ammonium methyl sulphate in which the polyethoxy groups together contain five ethoxy ($C_2H_4O$) groups;

G alkyl ($C_{13}$-$C_{15}$)-bis (polyethoxy) methyl ammonium methyl sulphate in which the polyethoxy groups together contain ten ethoxy ($C_2H_4O$) groups;

H alkyl ($C_{13}$-$C_{15}$)-bis (polyethoxy) methyl ammonium methyl sulphate in which the polyethoxy groups together contain fifteen ethoxy ($C_2H_4O$) groups; and

I alkyl ($C_{13}$-$C_{15}$)-bis (polyethoxy) methyl ammonium methyl sulphate in which the polyethoxy groups together contain twenty ethoxy ($C_2H_4O$) groups.

In the compounds containing polyethoxy groups, the groups are of the type $(C_2H_4O)_bH$ and the sum of the integer b in the specific compounds noted herein is two, five, ten, fifteen or twenty. Useful results have

been obtained using A, F or G as the quaternary ammonium salt and especially useful results have been obtained when the quaternary ammonium salt is compound B or compound E.

We have obtained useful results when component (a) is a propylene polymer and, in particular, a random copolymer of propylene with 1 to 5% by weight of ethylene. A convenient acid is succinic acid. The quaternary ammonium salt is usefully one of compounds A, B, E, F and G.

A useful polymer composition in accordance with the present invention comprises a) a propylene polymer, especially a random copolymer of propylene with 1 to 5% by weight of ethylene, (b) succinic acid and (c) a quaternary ammonium salt which is A, F or G or especially B or E.

In the polymer composition the proportion of the carboxylic acid compound which is component (b) is typically from 0.01 up to 3%, and preferably from 0.02 up to 1%, by weight relative to the polymer. The proportion of the quaternary ammonium salt which is component (c) is typically from 0.02 up to 3%, preferably from 0.05% up to 1%, and especially about 0.05 to 0.2% by weight relative to the polymer.

The relative weight proportions of component (b) and component (c) can be varied widely, for example from 30:1 to 1:10. However, we generally prefer to avoid a large excess of one component relative to the other component and hence we generally prefer that the weight proportions of (b) and (c) are from 25:1 to 1:3 and especially from 10:1 to 1:1 for example 4:1.

The polymer composition of the present invention may optionally contain further components. In particular, the composition may also include an amine and the presence of the amine in general produces an improved result compared to that obtained using only the carboxylic acid and specified quaternary ammonium salt.

Thus, as a further aspect of the present invention there is provided a polymer composition comprising (a) an olefin polymer, (b) a carboxylic acid compound which contains at least three carbon atoms, (c) a quaternary ammonium salt wherein at least one substituent on the nitrogen atom is an alkyl group containing at least eight carbon atoms and (d) an amine.

Components (a), (b) and (c) are as described in detail previously herein.

Component (d) is an amine as described in detail in our said European Patent Application Publication No 0267695. More specifically, the amine which is component (d) may be a diamine or a substituted amine, for example an ethoxylated amine. Thus component (d) may be a compound of general formula II or III:

$$\underset{R^8}{\underset{|}{R^7N}} - (CH_2)_m - \underset{R^8}{\underset{|}{NR^7}} \qquad II$$

$R^7R^8R^9N$ III

wherein

$R^7$ is a hydrocarbyl group or a substituted hydrocarbyl group and is preferably a hydrocarbyl group containing at least four carbon atoms;

$R^8$ is a hydrocarbyl group, a substituted hydrocarbyl group or a group $(R^{10}O)_x(C_2H_4O)_yH$;

$R^9$ is a hydrocarbyl group, a substituted hydrocarbyl group or a group $(R^{10}O)_x(C_2H_4O)_yH$, and may be the same as, or different from, $R^8$;

$R^{10}$ is an alkylene group containing 3 to 5 carbon atoms;

m is an integer and has a value of 1 to 10;

y is zero or is an integer which has a value of from 1 to 50; and

x is zero or is an integer which has a value of from 1 to 50.

Useful mixtures have been obtained in which the amine is a compound of formula III wherein at least one of the groups $R^8$ and $R^9$ is a group $(R^{10}O)_x(C_2H_4O)_yH$ in which the value of x and/or y is from 1 to 50. A mixture of compounds may be used as component (d), for example a mixture of compounds in which the value of at least one of m, x and y differs. The mixture may be of compounds in which the nature of $R^7$ varies, for example when $R^7$ is a mixture of alkyl groups. If a mixture of compounds is used, such a mixture may be one of compounds of the formula III in which there is present at least group $(R^{10}O)_x(C_2H_4O)_yH$ in which group the value of x and/or y varies, and particularly at least one group in which x is zero and the value of y varies.

The group $R^7$ is preferably an alkyl group and particularly is an alkyl group containing at least 8 carbon atoms. Typically $R^7$ does not contain more than 20 carbon atoms.

In the compound of formula II, $R^8$ is preferably either a hydrogen atom [when the values of x and y are zero in the group $(R^{10}O)_x(C_2H_4O)_yH$] or is a methyl group or a hydroxyethyl group. The value of m is

preferably from 2 to 6.

In the compound of formula III, the groups $R^8$ and $R^9$ are each, independently, either a group $R^7$ or a group $(R^{10}O)_x(C_2H_4O)_yH$ in which the value of x is zero and y is 0 to 50. Preferably the groups $R^8$ and $R^9$ are both the same as the group $R^7$ or at least one of $R^8$ and $R^9$ is a group $(R^{10}O)_x(C_2H_4O)_yH$ in which the value of y is 1 to 50. Preferred amines are those in which at least one of the groups $R^7$, $R^8$ and $R^9$ is an alkyl group containing at least 8 carbon atoms, especially at least 12 carbon atoms. The group $R^{10}$ is preferably a propylene group. Both x and y can be zero or at least one of x and y has a positive value. The value of x and y preferably does not exceed 20 and especially does not exceed 15. The group $(R^{10}O)_x$-$(C_2H_4O)_yH$ may be an OH ended alkylene oxide, for example a propylene oxide group, an OH ended ethylene oxide group or may contain both alkylene oxide and ethylene oxide groups. If x and y both have a positive value, it is generally preferred that (x + y) has a value of 2 to 50, and preferably does not exceed 20 and especially does not exceed 15.

If the amine contains a substituted group, the substituent may be a hydroxy group, one or more halogen atoms, a nitrile group, a hydrocarbyloxy group, a hydrocarbonyl group such as an acyl group, a hydrocarbyloxycarbonyl or a hydrocarbonyloxy group, whereof the hydrocarbyl groups may be further substituted with substituent groups of the foregoing types.

Amines which may be used as an optional component in the compositions of the present invention include

N,N-bis(hydroxyethyl)alkyl($C_{13}$ to $C_{15}$) amine;
N-methyl-N-hydroxyethyl-alkyl($C_{13}$ to $C_{15}$)amine;
N,N-dimethyl-octadecylamine;
N,N-bis(hydroxyethyl)-octadecylamine;
N-methyl-N,N-bis(coco)amine;
N,N-dimethyl-tallowamine; and
N-tallow-N,$N^1$,$N^1$-tris (hydroxyethyl)-1,3-diaminopropane.

If the composition includes an amine, the proportion by weight of the amine may be from 0.1 up to 10 times the proportion by weight of the specified quaternary ammonium salt which is component (c). The amine is typically present in a weight proportion of not more than twice the proportion by weight of the specified quaternary ammonium salt.

The polymer composition of the present invention may be obtained by adding the carboxylic acid, and the specified quaternary ammonium salt, and also the optional amine, separately to the olefin polymer or the additives may be pre-mixed and then added to the olefin polymer. The carboxylic acid, the specified quaternary ammonium salt, and the amine if present, when incorporated into the olefin polymer, result in an increase in the crystallisation temperature and/or an improvement in optical properties of the polymer. If an amine is used, this can react with the carboxylic acid and we believe that the product of such reaction could be less effective in giving the desired effects when incorporated into an olefin polymer. Accordingly, we prefer to avoid maintaining compositions which include the optional amine at an elevated temperature, for example above 120 °C and especially above 200 °C, for a prolonged period of time, for example in excess of 15 minutes.

Some compounds which can be used as components (b) and (c), and optional component (d) of the polymer compositions of the present invention are either liquids or waxy solids at ambient temperature and are difficult to handle in this form, especially if accurate metering of the components is required. Hence, it may be preferred that the compositions are obtained as a polymer masterbatch containing a higher concentration of the composition than is required in the final polymer composition. The polymer masterbatch may be a mixture obtained by blending, without melting, with a particulate polymer. However, it is generally preferred that the masterbatch has been obtained by blending with molten polymer. In this case, if the masterbatch contains an amine, together with component (b) reaction of the amine with the acid which is component (b) may occur if mixing is effected at a sufficiently high temperature. It is desirable to minimise the possibility of reaction between component (b) and optional component (d). One technique of minimising the possibility of reaction of amine and acid is to form at least two masterbatches, one of which contains the amine in the absence of any acid and the other of which contains acid in the absence of any amine. Component (c), the specified quaternary ammonium salt, may be included in a masterbatch with either the carboxylic acid which is component (b) or with the amine which is optical component (d), or may be in a masterbatch separate from either component (b) or component (d). However, we have found that a satisfactory masterbatch can be obtained which contains components (b), (c) and (d) if components (b), (c) and (d) are mixed with a molten polymer at a temperature in the range 120 °C to 150 °C. Suitable polymers for use in obtaining such a masterbatch are low density polyethylene, polyethylene wax or ethylene/vinyl acetate copolymer. The mixing may be effected using an apparatus which is suitable for processing a

molten polymer, for example an extruder. The amount of additive in the masterbatch is dependent of the nature of the particular additive. Typically the masterbatch contains at least 5% by weight of additive but in general the level of additive does not exceed 90% by weight. The level of additive in the masterbatch is generally at least 10% by weight. It is very convenient to form masterbatches containing high proportions of additive and we have been able to form masterbatches containing 70% by weight of additives and satisfactory masterbatches containing 50% up to 70% by weight of additives are readily formed. If components (b), (c) and optional component (d) have been formed into two or more separate masterbatches, these may be pre-mixed in any desired proportion and without being subjected to an elevated temperature and the mixture may be added to a polymer. Alternatively, the separate masterbatches may be added separately so the polymer, without being premixed. In compositions containing the optional amine, we have found that with some amines, the use of a masterbatch not only results in easier handling of the material but can also lead to improved colour in the final polymer composition.

If a polymer masterbatch is formed, it will be appreciated that it is desirable that the polymer used to form the masterbatch should be compatible with the polymer used for the polymer composition. Thus, the polymer used for the masterbatch is typically of the same general type as the polymer used for the polymer composition, for example both polymers are low density polyethylene or are both propylene homopolymers, but a masterbatch containing low density polyethylene may be incorporated satisfactorily into a propylene polymer. In general the amount of masterbatch to be used is a minor proportion of the final polymer composition and compatibility may be more readily achieved using such relative proportions of the polymers. By way of example, a masterbatch is used in an amount of 1 to 10% by weight of the final composition when the masterbatch contains 10% by weight of the carboxylic acid, specified quaternary ammonium salt, and/or optional amine. More specifically there is used 3 to 5% by weight of an acid masterbatch containing 10% by weight of the carboxylic acid and between 2% and 15% by weight of the specified quaternary ammonium salt. If an amine is to be included in the polymer as optional component (d), there is also used 0.2 to 5% by weight of an amine masterbatch containing 10% by weight of the optional amine. Masterbatches containing other proportions of additive are added in the appropriate amounts in dependence of the level of additive in the masterbatch and the level required in the final polymer composition.

The amine which is optional component (d), is generally a liquid or waxy solid and hence the use of the masterbatch is desirable when an amine is present. However, using only components (b) and (c),these materials may be mixed in the molten state, for example at a temperature of from 150 °C to 200 °C, and the molten material cooled to form pellets or a solid block from which flakes may be obtained. Hence, a masterbatch is not generally necessary using components (b) and (c) in the absence of optional component (d).

The polymer compositions of the present invention possess an increased crystallisation temperature and/or improved optical properties compared to the original polymer. The presence of the optional amine can produce further improvements in optical properties and/or crystallisation temperature.

The polymer composition of the present invention may also include other additives which are conveniently added to olefin polymers. Thus, the polymer composition may include other nucleating agents. The polymer may also include inorganic additives such as silica, especially finely divided silica, which may be present in proportions of less than 1% by weight relative to the polymer. By finely divided silica is meant silica having an average particle size of not more than 5 micrometres and especially not more than one micrometre.

The polymer composition also typically includes additives to at least partially inhibit the degradation of the olefin polymer component of the composition. These additives include, inter alia, antioxidants, light stabilisers, antacids, lubricants, anti-static agents, optical brighteners and, as necessary, copper or other metal deactivators. The proportion of each of such additives is typically less than 2% by weight based on the olefin polymer and in general does not exceed 1% by weight based on the olefin polymer. A wide range of additives which provide some inhibition of the degradation of olefin polymers are known and the skilled worker will be able to select appropriate additives in accordance with the particular olefin polymer and the conditions under which it is to be processed and used. Examples of additives which can be used include, inter alia,

1,1,3-tris(2-methyl-4-hydroxy-5-tertiarybutylphenyl)butane;
polymerised 1,2-dihydro-2,2,4-trimethylquinoline;
2,6-di-tertiarybutyl-4-methylphenol;
4,4-thio-bis-(6-tertiarybutyl-4-methylphenol);
oxalic acid bis (benzylidene hydrazide);
$N,N^1$-bis(beta-3,5-ditertiarybutyl-4-hydroxyphenylpropiono) hydrazide;

pentaerythritol-tetra-[3-(3,5-di-tertiary-butyl-4-hydroxyphenyl)-propionate];
beta-(3,5-ditertiary-butyl-4-hydroxyphenyl)-propionic acid-n-octadecyl ester;
2,2-bis[4-(2-(3(3,5-di-tertiary-butyl-4-hydroxyphenyl)propionyl)oxy)ethoxy)phenyl]propane;
2-($2^1$-hydroxyphenyl)-benzotriazole derivatives;
2-hydroxybenzophenones such as 4-octoxy-2-hydroxybenzophenone; sterically hindered amines such as 4-benzoyl-2,2,6,6-tetramethylpiperidine;
tris(2,3-di-tertiary-butylphenyl)phosphite;
an ester of thiodipropionic acid such as dilaurylthiodipropionate; calcium stearate;
zinc stearate;
dehydrotalcite;
glycerol mono-octadecanoate; and
2,5-bis(5-tert.butylbenzoxazol-2-yl) thiophene.

As is well known, if an ester of thiodipropionic acid is used, this is generally used together with a phenolic antioxidant such as 1,1,3-tris(2-methyl-4-hydroxy-5-tertiarybutylphenyl)butane.

These further polymer additives may be incorporated into the polymer using any of the known techniques and some of all of these polymer additives may be pre-mixed with one or more of the components of the composition of the present invention. Alternatively, the further additives may be incorporated into the polymer in a separate stage before or after, preferably before, adding components (b) and (c), and optionally component (d) if present, of the composition of the present invention.

The polymeric compositions in accordance with the present invention may be formed into film and other shaped articles by any suitable technique, particularly by extrusion or, especially, by injection moulding. We have found that the effectiveness of the composition of a carboxylic acid, a specified quaternary ammonium salt and the optional amine, can be dependent to some extent on the technique used to obtain the shaped article. Particularly useful effects have been noted when the shaped article has been obtained by injection moulding.

The polymer composition of the present invention may be obtained by blending the components of the composition together using any known, suitable technique as discussed previously herein. The polymer, carboxylic acid, specified quaternary ammonium salt and amine, if an amine is being used, may be mixed under conditions in which the polymer is molten, the mixture granulated and the granulated polymer used in a subsequent melt processing stage to give a shaped article, particularly by injection moulding However, in order to minimise the time during which the acid and any optional amine are mixed at elevated temperature, it is preferred that the acid and amine, if used, are added separately, or as a mixture obtained by a solids blending technique, to the polymer at the final stage of producing a shaped polymer article, for example at the injection moulding stage.

The production of polymer compositions in accordance with the present invention is described in the following illustrative examples, in which some properties of the compositions produced are also given. Unless otherwise stated, percentages in the polymer compositions are by weight relative to the polymer component.

## Examples 1 to 17

Polymer compositions were prepared and tested as follows.

The additives were mixed with particulate polymer by tumble blending and extruding the powder blend using a Betol extruder having a 25mm diameter screw with a cavity transfer mixer. The temperature profile in the extruder was 190 °C up to 220 °C, dropping to 205 °C at the die. The extruded lace was passed through a water bath, dried and then granulated.

The products obtained were then formed into discs of 8.9cm diameter and 1.6mm thickness by injection moulding the granules using a Boy 30M injection moulding machine operating at 240 °C and with a mould temperature of 50 °C. On ejection from the mould, the moulded discs were allowed to cool naturally.

Haze measurements were effected on the injection moulded discs using a Gardner Hazemeter.

The polymer used was a random copolymer of propylene and ethylene containing about 2.5% weight of ethylene and available as 'Propathene' (Registered Trade Mark) grade PXC 22406 from ICI Chemicals and Polymers Limited.

The compositions produced and the results obtained are set out in the following Table, together with the results of comparative examples not in accordance with the present invention.

**TABLE**

| Example or Comp. Ex (a) | Additive | | Relative Clarity (d) | Haze (%)(e) |
|---|---|---|---|---|
| | Type (b) | Weight (%)(c) | | |
| A | NIL | NIL | 22 | 85 |
| B | DBS | 0.25 | 130 | 39 |
| C | SA | 0.4 | 92 | 50 |
| D | SA<br>EA | 0.4<br>0.15 | 120 | 42 |
| 1 | SA<br>QA | 0.4<br>0.1 | 130 | 40 |
| 2 | SA<br>QB | 0.4<br>0.1 | 140 | 39 |
| 3 | SA<br>QC | 0.4<br>0.1 | 135 | 41 |
| 4 | SA<br>EA<br>QC | 0.4<br>0.06<br>0.1 | 140 | 40 |
| 5 | SA<br>QD | 0.4<br>0.1 | 122 | 43 |
| 6 | SA<br>EA<br>QD | 0.4<br>0.06<br>0.1 | 127 | 42 |

TABLE (Cont)

| Example or Comp. Ex (a) | Additive Type (b) | Additive Weight (%)(c) | Relative Clarity (d) | Haze (%)(e) |
|---|---|---|---|---|
| 7 | SA<br>QE | 0.4<br>0.1 | 137 | 40 |
| 8 | SA<br>EA<br>QE | 0.4<br>0.06<br>0.1 | 140 | 39 |
| 9 | SA<br>QF | 0.4<br>0.1 | 125 | 43 |
| 10 | SA<br>EA<br>QF | 0.4<br>0.06<br>0.1 | 137 | 41 |
| 11 | SA<br>QG | 0.4<br>0.1 | 127 | 43 |
| 12 | SA<br>EA<br>QG | 0.4<br>0.06<br>0.1 | 125 | 42 |
| 13 | SA<br>QH | 0.4<br>0.1 | 117 | 44 |
| 14 | SA<br>EA<br>QH | 0.4<br>0.06<br>0.1 | 120 | 44 |
| 15 | SA<br>QI | 0.4<br>0.1 | 122 | 44 |
| 16 | SA<br>EA<br>QI | 0.4<br>0.06<br>0.1 | 122 | 43 |
| E* | NIL | NIL | 15 | 89 |
| 17* | SA<br>QA | 0.1<br>0.06 | 112 | 48 |
| F* | SA<br>EA | 0.1<br>0.06 | 90 | 56 |

**Notes to Table**

(a) * In these Examples and Comparative Examples the polymer was a random copolymer of propylene and ethylene available from Himont as MOPLEN EPI X30F.

(b) DBS is dibenzylidene sorbitol.
SA is succinic acid.
EA is an ethoxylated amine of the type $R^7N[(C_2H_4O)_yH]_2$ where y has an average value of one and $R^7$ is a mixture of linear and branched aliphatic groups containing from 13 to 15 carbon atoms.
QA is quaternary ammonium salt A as herein defined.
QB is quaternary ammonium salt B as herein defined.
QC is quaternary ammonium salt C as herein defined.
QD is quaternary ammonium salt D as herein defined.
QE is quaternary ammonium salt E as herein defined.
QF is quaternary ammonium salt F as herein defined.
QG is quaternary ammonium salt G as herein defined.
QH is quaternary ammonium salt H as herein defined.
QI is quaternary ammonium salt I as herein defined.

(c) % weight of additive relative to the polymer.

(d) Relative clarity is a comparison of the clarity of an injection moulded disc of the polymer compared to a standard (the polymer with no additives, as in Comp.Ex.A). The apparatus consists of a light cabinet with a grid marked on the surface. 82.55mm (3.25 inches) above the top of the light cabinet is a flat support having a slit cut in it through which the grid is visible. The stand is surrounded by an enclosure with darkened interior surfaces.

Two reference discs are stacked together and placed over the slit to almost totally obscure the image of the grid as viewed through this pile of two discs. The test specimens (injection moulded discs obtained as described) are stacked over the slit, adjacent to the reference discs, further discs being added to the stack until the image of the grid viewed through the test specimens is almost totally obscured and corresponds essentially with the image seen through the reference discs. If exact correspondence is not achieved, an estimate of part discs is made.

The relative clarity is expressed as the number of discs in the stack multiplied by 10, that is a relative clarity of 100 corresponds to a stack of 10 discs.

(e) % haze is determined in accordance with ASTM Test Method D 1003-59T using a Gardner Hazemeter and is measured on an injection moulded disc.

## Claims

1 A polymer composition comprising
a) an olefin polymer;
b) a carboxylic acid compound which contains at least three carbon atoms; and
c) a quaternary ammonium salt wherein at least one substituent on the nitrogen atom is an alkyl group containing at least eight carbon atoms.

2 A composition as claimed in claim 1 wherein component b) is a carboxylic acid compound which either contains at least two carboxylic acid groups attached to an optionally substituted saturated aliphatic hydrocarbon group or contains at least one carboxylic acid group attached to an optionally substituted saturated or unsaturated ring system.

3 A composition as claimed in either claim 1 or claim 2 wherein component c) is a compound of general formula:-

$[NR^1R^2R^3R^4]X$

wherein
$R^1$ is an alkyl group containing at least eight carbon atoms;
$R^2$ is a hydrocarbyl group, a substituted hydrocarbyl group or a group $(R^5O)_a(C_2H_4O)_b\ R^6$;
$R^3$ is a hydrocarbyl group, a substituted hydrocarbyl group or a group $(R^5O)_a(C_2H_4O)_b\ R^6$;
$R^4$ is a hydrocarbyl group, a substituted hydrocarbyl group or a group $(R^5O)_a(C_2H_4O)_b\ R^6$;
$R^5$ is an alkylene group containing 3 to 5 carbon atoms;
$R^6$ is hydrogen, a hydrocarbyl group, a substituted hydrocarbyl group or an acyl group;
a is zero or is an integer which has a value of from 1 to 500;
b is zero or is an integer which has a value of from 1 to 50; and
X is an anion in an amount and having a valency to give a neutral compound.

4 A composition as claimed in claim 3 wherein X is a halide ion or a methylsulphate ion.

5 A composition as claimed in either claim 3 or claim 4 wherein at least one of the groups $R^2$, $R^3$ and $R^4$ is a group $(R^5O)_a(C_2H_4O)_b\ R^6$ in which a is zero and $R^6$ is hydrogen.

6 A composition as claimed in claim 3 wherein component c) is selected from
alkyl ($C_{13}$-$C_{15}$)-dimethyl-octadecanoyloxyethyl ammonium methyl sulphate;
alkyl ($C_{13}$-$C_{15}$)-trimethylammonium methyl sulphate;

alkyl ($C_{13}$-$C_{15}$)-trimethylammonium chloride;
alkyl ($C_{13}$-$C_{15}$)-benzyldimethylammonium chloride;
alkyl ($C_{13}$-$C_{15}$)-bis (polyethoxy) methyl ammonium methyl sulphate in which the polyethoxy groups together contain two ethoxy ($C_2H_4O$) groups;
alkyl ($C_{13}$-$C_{15}$)-bis (polyethoxy) methyl ammonium methyl sulphate in which the polyethoxy groups together contain five ethoxy ($C_2H_4O$) groups;
alkyl ($C_{13}$-$C_{15}$)-bis (polyethoxy) methyl ammonium methyl sulphate in which the polyethoxy groups together contain ten ethoxy ($C_2H_4O$) groups;
alkyl ($C_{13}$-$C_{15}$)-bis (polyethoxy) methyl ammonium methyl sulphate in which the polyethoxy groups together contain fifteen ethoxy ($C_2H_4O$) groups;
alkyl ($C_{13}$-$C_{15}$)-bis (polyethoxy) methyl ammonium methyl sulphate in which the polyethoxy groups together contain twenty ethoxy ($C_2H_4O$) groups.

7 A composition as claimed in claim 1 wherein component a) is a propylene polymer, component b) is succinic acid and component c) is selected from
alkyl($C_{13}$-$C_{15}$)-dimethyl-octadecanoyloxyethyl ammonium methyl sulphate;
alkyl ($C_{13}$-$C_{15}$)-trimethylammonium methyl sulphate;
alkyl ($C_{13}$-$C_{15}$)-bis (polyethoxy) methylammonium methyl sulphate in which the polyethoxy groups together contain two ethoxy groups;
alkyl ($C_{13}$-$C_{15}$)-bis (polyethoxy) methylammonium methyl sulphate in which the polyethoxy groups together contain five ethoxy groups; and
alkyl ($C_{13}$-$C_{15}$)-bis (polyethoxy) methylammonium methyl sulphate in which the polyethoxy groups together contain ten ethoxy groups.

8 A composition as claimed in any one of claims 1 to 7 which also includes an amine.

9 A film, an extruded article or an injection moulded article formed from a composition as claimed in any one of claims 1 to 8.

10 A process of preparing a polymer composition which comprises mixing an olefin polymer with a carboxylic acid compound which contains at least three carbon atoms and a quaternary ammonium salt wherein at least one substituent on the nitrogen atom is an alkyl group containing at least eight carbon atoms wherein during at least a part of the mixing the polymer is molten.

European Patent Office

# EUROPEAN SEARCH REPORT

Application Number

EP 90 30 7406

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 324 494 (W.R GRACE & CO.)<br>* Claims; table VIA; examples IX-XII *<br>--- | 1-10 | C 08 L 23/02<br>C 08 K 5/19<br>C 08 K 5/09 |
| A,D | EP-A-0 267 695 (ICI)<br>* Whole document *<br>----- | 8 | |
| | | | **TECHNICAL FIELDS SEARCHED (Int. Cl.5)** |
| | | | C 08 K<br>C 08 L |

The present search report has been drawn up for all claims

| Place of search | Date of completion of the search | Examiner |
|---|---|---|
| THE HAGUE | 18-09-1990 | WILSON A.J.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document